# EUROPEAN PATENT APPLICATION

(11) **EP 0 638 426 A1**
(43) Date of publication of application: **15.02.1995**
(21) Application number: 94111917.4
(22) Date of filing: 30.07.1994
(51) Int. Cl.: B41J 2/175, C09D 5/20

(54) **Nozzle cover for an inkjet print head and method for applying the same**

(30) Priority: 07.08.1993 DE 4326564
(71) Applicant: EASTMAN KODAK COMPANY, Rochester, New York 14650-2201 (US)
(72) Inventor: Schullerus, Wolfgang, D-97714 Oerlenbach Ebenhausen (DE)
(74) Representative: Blickle, K. Werner, Dipl.-Ing.

(57) **Abstract**

The nozzle cover for an inkjet print head is in one piece and made of a chemically cross-linking elastomer layer (10) which adheres to nozzle outlet surface (4). The non-cross-linked elastomer material (2) is applied to the nozzle outlet surface (4) in liquid state and then brought to a rectangular form. The subsequent cross-linking process produces an elastomer layer (10) which adheres adhesively to the nozzle outlet surface (4). The elastomer layer (10) is pulled off before the inkjet print head is installed.

## Description

The invention relates to a nozzle cover for an inkjet printing head.

Inkjet print heads exhibit microstructured and consequently sensitive components. These include the ink transport channels which terminate in a flat surface in the form of a nozzle. This surface is commonly referred to as the nozzle outlet surface. Any damage to the nozzles reduces the printing quality which can be achieved with the inkjet print head. Consequently, the nozzle outlet surfaces of inknozzle print heads are protected against transport and/or storage damage (drying out or ink leakage) by a cover.

A cover for the nozzle outlet surface of an inkjet print head is described in the Hewlett-Packard Journal of August 1988, page 44. The nozzle outlet surface of an inkjet print head is covered with an adhesive tape which forms a barrier preventing the leakage of ink from the nozzles. The adhesive tape consists of an adhesive material on a polyester backing. Before this adhesive tape can be applied, however, the nozzle outlet surface has to be cleaned with deionized water to remove any ink residues. The adhesive tape must be applied immediately after cleaning so that ink cannot leak from the nozzles again, thus reducing the adhesion and/or the sealing effect. It cannot be ruled out that residues of adhesive remain on the nozzle nozzles when the adhesive tape is removed, thus causing a deterioration in the printing quality.

European patent application EP-OS 0 418 828 relates to an inkjet print head with cover. A sealing tape which adheres to one side of the ink cartridge with a bonding agent is pressed against the nozzle plate by a cap. The cap is of the same width as the nozzle plate and has two arms which engage in grooves on the ink cartridge. An elastic part is attached to the inside of the cap between the two arms. The arms hold the cap on the ink cartridge and at the same time press the elastic part against the sealing tape and the nozzle plate. The force exerted on the sealing tape as a result of the deformation of the elastic part causes the nozzle plate to be sealed. ♀In order to ensure good sealing in this case, several components must fit exactly together. This means that an inexpensive sealing of the nozzle outlet surface is not possible.

The object of the invention is to create a nozzle cover which can be automatically fitted in one piece and removed without leaving any residues. Any time-consuming cleaning of the nozzle outlet surface before fitting the cover should be avoided. This problem is solved by the invention in that the cover of the nozzle outlet surface consists of a one-piece chemically cross-linked elastomer coating which adheres to the nozzles of the print head and the nozzle outlet surface.

The advantages of the solution to which the invention relates are that only a simple preliminary treatment of the nozzle outlet surface is required before the liquid, non-cross-linked elastomer material is applied. The liquid elastomer even enables uneven nozzle outlet surfaces to be sealed. Furthermore, dirt particles adhering to the nozzle outlet surface or the nozzles are surrounded by the elastomer mass and sealed in. Finally the cover can be easily removed from the nozzle outlet surface simply by pulling off.

Furthermore, the method of applying the inkjet cover to which this invention relates is very cheap and can be performed with only a few process steps.

Further embodiments of the invention are described in the subclaims.

The subject of the invention is described below using an embodiment illustrated in the drawings.
Fig. 1 shows a schematic illustration of the application of the liquid elastomer mass to the nozzle outlet surface,
Fig. 2 shows a schematic illustration of the nozzle outlet surface with the cross-linked elastomer covering layer.
Fig. 3 shows a schematic illustration of the removal of the cross-linked elastomer coating before use of the inkjet print head.

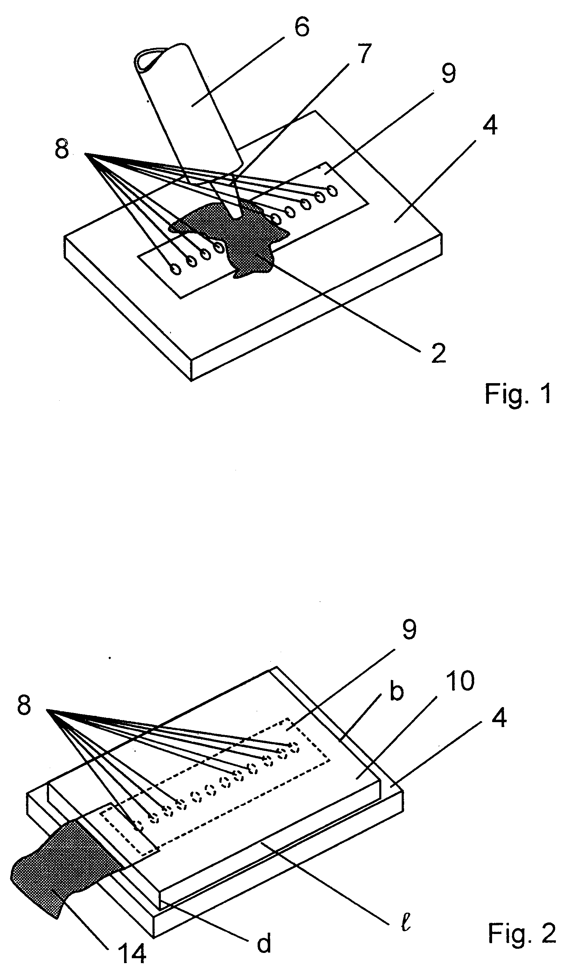

Fig. 1 shows a schematic illustration of the application of the liquid elastomer mass 2 to the nozzle outlet surface 4 from which any liquid ink had previously been removed. The elastomer material 2 is pressed out of cartridge 6 through a hollow needle 7 and then applied to the nozzle outlet surface 4 and the nozzles 8. The nozzles 8 are arranged in a row 9. The quantity of the elastomer material applied depends on the thickness and surface area of the cover required. Elastomer material 2 is preferably a two-component elastomer which, in mixed state at room temperature, has a dynamic viscosity of between 10 and 100 Pascal-seconds. The applied elastomer mass is brought into a specific form by shear deformation. It is therefore particularly advantageous to use thixotropic materials, i.e. the material becomes more liquid with increasing shear deformation and can thus be easily distributed over the nozzle outlet surface 4. At the end of deformation it retains its form and flows only slightly. The subsequent chemical cross-linking process transfers the formed elastomer body into the rubber-elastic state. This chemical cross-linking process can be accelerated, if necessary, by heat (room temperature or elevated temperature), by radiation (ultraviolet light) or by some other suitable manner.

As shown in Fig. 2, the applied elastomer material 2 takes on a roughly rectangular form with a length l, width b and thickness d. A textile band 14 extending beyond the dimensions of rectangular elastomer layer 10 is embedded into the non-cross-linked elastomer material 2. The textile band 14 extends beyond one of the sides of the elastomer layer 10 with the side length b. In cross-linked state, this textile band 14 is firmly anchored in the rectangular elastomer layer 10. The textile band represents a pull tab which facilitates removal of the elastomer layer 10 before the inknozzle print head is installed in the print unit. The rectangular elas 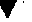 tomer layer 10 covers the nozzles 8 underneath (shown here in dotted lines) and extends on all sides beyond the row of nozzles 9, thus covering a large area of the nozzle outlet surface. The nozzles 8 are thereby sealed to prevent the leakage of ink, the ingress of air and soiling. The thickness a of cross-linked elastomer layer 10 raises it above the nozzle outlet surface, thus protecting the nozzles 8 under the elastomer layer 10 also against mechanical damage.

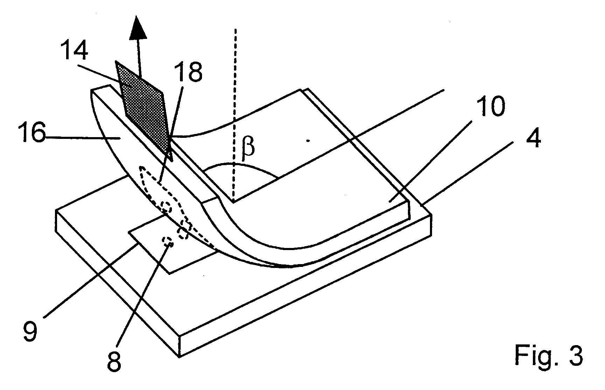

Fig. 3 shows the removal of the cross-linked elastomer layer 10. It is advantageous to use materials which have a limited adhesion to the materials of the row of nozzles 9 and/or nozzle outlet surface 4. These materials should have a width-specific band removal force of between 0.03 N/mm and 0.5 N/mm at a removal angle β (preferably 135°). As can be seen in Fig. 3, surface 16 of elastomer layer 10 facing towards the nozzle outlet surface 4 exhibits the negative imprint 18 of the row of nozzles 9 with the individual nozzles 8. The non-cross-linked elastomer material penetrates a few micrometres into the nozzles 8 on application. The penetrated material is fully removed from nozzles 8 again when the cross-linked elastomer layer is pulled off.

## Claims

1. Nozzle cover for an inkjet print head, characterized in that the nozzle cover is formed as one piece consisting elastomer layer (10) which adheres to the nozzles (8) of the row of nozzles (9) and the nozzle outlet surface (4).

2. Nozzle cover for an inkjet print head according to Claim 1, characterized in that the elastomer layer (10) consists of a self-cross-linking two-component elastomer which in mixed state at room temperature has a dynamic viscosity of between 10 and 100 Pascal-seconds and exhibits thixotropic material properties.

3. Nozzle cover for an inkjet print head according to Claim 1 and 2, characterized in that a textile band (14) is embedded into the elastomer layer (10).

4. Nozzle cover for an inkjet print head according to Claims 1 to 3, characterized in that the non-cross-linked elastomer material is formed on the nozzle plate into a band which in cross-linked state and at a removal angle of approx. 135° exhibits a width-specific removal force of between 0.03 and 0.5 Newton/mm.

5. Method of applying the nozzle cover for an inkjet print head, characterized in that
a) ink droplets adhering to the row of nozzles (9) or the nozzle outlet surface (4) are removed,
b) the two-component elastomer is applied through a hollow needle (7),
c) the applied and non-cross-linked elastomer material is formed in such a way that the flat area of the nozzle outlet surface (4) together with the nozzles (8) is covered, and
d) the rectangular elastomer layer (10) is cross-linked.

6. Method of applying the nozzle cover for an inkjet print head according to Claim 5, characterized in that a textile band (14) is embedded into the non-cross-linked elastomer material.

7. Method of applying the nozzle cover for an inkjet print head according to Claims 5 and 6, characterized in that the non-cross-linked elastomer material is formed on the nozzle outlet surface into a band of approximately 10 mm.
